(19) Europäisches Patentamt / European Patent Office / Office européen des brevets

(11) **EP 2 045 858 B1**

(12) **EUROPEAN PATENT SPECIFICATION**

(45) Date of publication and mention
of the grant of the patent:
**07.04.2010 Bulletin 2010/14**

(51) Int Cl.:
*H01M 4/80* (2006.01)      *H01M 8/12* (2006.01)
*H01M 4/04* (2006.01)

(21) Application number: **07018745.5**

(22) Date of filing: **24.09.2007**

(54) **A novel synergistic process and recipe for fabrication of a high integrity membrane electrode assembly of solid oxide fuel cell**

Neues synergistisches Verfahren und Rezeptur zur Herstellung einer Membranelektrodenanordnung von hoher Integrität für eine Festoxidbrennstoffzelle

Nouveau procédé synergique et recette de fabrication d'un ensemble d'électrode de membrane à forte intégrité pour pile à combustible d'oxyde solide

(84) Designated Contracting States:
**DE FR NL**

(43) Date of publication of application:
**08.04.2009 Bulletin 2009/15**

(73) Proprietor: **Institute of Nuclear Energy Research Atomic Energy Council, Executive Yuan Taoyuan County 32546 (TW)**

(72) Inventors:
• **Lee, Maw-Chawin**
**c/o Institute of Nuclear Energy Research**
**Atomic Energy Council,**
**Executive Yuan**
**Taoyuan County 32546 (TW)**
• **Kao, Wei-Xin**
**c/o Institute of Nuclear Energy Research**
**Atomic Energy Council,**
**Executive Yuan**
**Taoyuan County 32546 (TW)**
• **Lin, Tai-Nan**
**c/o Institute of Nuclear Energy Research**
**Atomic Energy Council,**
**Executive Yuan**
**Taoyuan County 32546 (TW)**

• **Chang,Yang-Chuang**
**c/o Institute of Nuclear Energy Research**
**Atomic Energy Council,**
**Executive Yuan**
**Taoyuan County 32546 (TW)**
• **Wang, Chun-Hsiu**
**c/o Institute of Nuclear Energy Research**
**Atomic Energy Council,**
**Executive Yuan**
**Taoyuan County 32546 (TW)**

(74) Representative: **Hager, Thomas Johannes**
**Hoefer & Partner**
**Patentanwälte**
**Pilgersheimer Strasse 20**
**81543 München (DE)**

(56) References cited:
DE-A1- 4 307 967      US-A- 4 857 420
US-A- 5 273 837       US-A1- 2004 183 055
US-A1- 2006 269 813   US-A1- 2007 178 366

## Description

## Background of the Invention

Field of the Invention

The invention is related to an innovative process for membrane electrode assembly, from formulating with raw materials, and preparing electrodes of planar SOFC-MEA containing anode and electrolyte substrate slurry, to making green tape of electrode by tape casting process. The green tape is cast into green substrate by lamination process, and then finished into high integrity green substrate by vacuum hot press system (VHPS). Through calcinations and sintering, the green substrate can be made into electrode substrate with high mechanical strength, controllable micro-structural characteristics (porosity/ gas permeability), thickness, and dimensions. Further, screen-printing, sputtering coating, spin coating, and spraying processes are alternatively employed to enable the production of high-performance SOFC unit cell. Their application to SOFC assures high reliability, durability and low degradation rate of the unit cell. The raw materials the invention refers to are YSZ/GDC/YDC/LSGM electrolytes, NiO + YSZ/GDC + NiO/YDC + NiO/LSGM + NiO anode materials and LSM/LSCF cathode materials. But they are not limited to the above materials.

Description of the Prior Art

SOFC has high conversion efficiency, low noise, low pollution, high reliability and fuel diversity, as well as the potential to replace internal combustion engine in solving energy shortage issue. Especially when fossil fuels are in short supply, and hydrogen, natural gas and LPG become the alternatives, SOFC is a very important energy conversion device and plays a key role in the new energy era.

The critical goals for the Planar Type Solid Oxide Fuel Cell - Membrane Electrode Assembly (SOFC-MEA) currently under development include high performance, high durability, high stability and low degradation rate of MEA. To achieve the above goals, the key factors are the MEA materials and structure design. Changing the materials and MEA structure also changes MEA properties. For materials, the electrolyte is mainly 8YSZ, which operation temperature depends on the supported substrate structure. Electrolyte Supported Cell (ESC) is operated at temperature range of 800 - 1000°C with electrolyte thickness of 150~300 $\mu$m and termed as first generation SOFC. The second generation SOFC adopts Anode Supported Cell (ASC), with operation temperature range of 650~850 °C and electrolyte thickness of 10 $\mu$m. NiO + 8YSZ are the anode materials for ASC/ESC with thicknesses of 50~60 $\mu$m (ESC) and 500~1200 $\mu$m (ASC). The cathode materials are mainly LSM and LSCF having thickness 30- 60 $\mu$m. New electrolyte materials and cathode materials are actively under development in many international laboratories. It is expected the new materials lower SOFC-MEA operation temperature to 500~700°C. Then, the modules and parts for SOFC Stack, like inter-connector, can use metal materials to replace ceramic materials. The advantages will include easy fabrication, increased mechanical strength/stability/durability and reduced cost. Increasing SOFC marketing competitiveness and penetration will create huge niche for SOFC industry. The technical development in universities and national laboratories emphasizes materials development in the hope to lower resistance, increase ionic conductivity/ electric conductivity, and increase SOFC powder density. On Nature magazine, there are many publications on new electrolytes like LSGM, YDC, LSGMC and 10ScCeSZ, or new cathode materials like LSM/LSCF/LSF/LSC/LSCM/BSCF/SSC. In industry, the emphasis is on material processing technology and performance stability. If the right materials are selected to achieve the desired properties and high reliability, and work with SOFC-MEA process and structure design, MEA mechanical/chemical stability, durability, energy conversion and powder output will be upgraded. Then, SOFC will become the best device in energy conversion.

Many foreign laboratories have been through 15~20 years investing in R&D and testing SOFC performance, also overcoming technical barriers and creating business opportunities. There is collaboration between corporation and national laboratory and joint venture is formed. Resource exchange, integration, merger or cooperation are taking place in Europe and America, such as ECN and InDEC, or H.C. Stark, IKTS and Karafol/Straxera/Webasto, NETL/SECA, EPFL and HT Ceramix. In the US, their national laboratories such as PNNL et al. and six large companies including Simens Westinghouse and GE and Delphi et al. are collaborating on verification of technical reliability, cost analysis and reduction to establish SOFC industry.

The SOFC-MEA related materials that have potential for commercialization include those mentioned previously, such as 8YSZ as electrolyte, NiO + 8YSZ as anode materials, LSM/LSCF and LSF/LSC as cathode materials. As for MEA processes, they are rarely published and proprietary to the companies who develop and do not want to patent the technologies because they are afraid their interest be hurt when the patented technologies are copied or modified by others.

Current SOFC-MEA processes are based on tape casting to produce green tape of electrode first. The following lamination process allows adjustment for the thickness and geometry for green substrate. Then, the calcinations and sintering process produces electrode substrate or half cell substrate (including electrolyte layer and support electrode layer). At last, the screen-printing technique is used to build cathode layer onto half cell board, which completes the production of SOFC-MEA. The main drawbacks for the SOFC-MEA produced in this way are: insufficient mechanical strength, poor stability and durability (poor resistance to Redox Cycling/Thermal Cycling). Under the basic requirement for porosity (beneficial for gas-solid reaction mechanism) in cathode and anode, it is necessary to sacrifice mechanical strength. Later, this will cause rupture and failure to the assembled cell stack. Such a drawback hinders the development of perfect structure for SOFC and prompts immediate slurry.

**Summary of the Invention**

The main objective for the invention is to provide a material recipe and its process to produce HI-SOFC-MEA or HI-Unit Cell. Such a HI-SOFC-MEA has ① high mechanical strength and hardness ② adjustable substrate porosity and gas permeability ③ controllable MEA multi-layer materials and microstructure or density ④ controllable MEA layer number and thickness ⑤ high sintering density ⑥ high stability and robust operational capability. Due to the above special characteristics, the HI-SOFC-MEA can increase cell output powder density and fuel energy conversion efficiency. The most important feature is its high mechanical strength that is suitable for Cell Stack assembly and test. Cells with fragility tend to cause rupture or lower reliability and yield for cell stacks during production or testing process.

The content for the invention contains one recipe and two (electrode green substrate and electrode substrate) processes. They are described as follows respectively:

Recipe and process for producing electrode green substrate:
The typical recipe for the electrode substrate slurry is listed in Table 1.

Table 1: Slurry Recipe and Process to Produce SOFC-MEA Electrode Substrate

| | Recipe Content Materials/Name(a) | Weight Percentage Range (%) | Materials Function | Note(c) |
|---|---|---|---|---|
| 1. Electrode Materials | 1. 8YSZ (Electrolyte) | 50~86(approx. optimized QOV (b)=68.0) | Electrolyte Materials | For Electrolyte Substrate/Layer (d) |
| | 2. NiO/8YSZ (Anode) | 50~86(approx. optimized QOV(b)=68.0) | Anode Materials | For Anode Substrate/ Layer |

| | | 3. MEK (Solvent 1) | 12~22(approx. optimized QOV(b)=16.0) | Solvent Media to Dissolve Electrode Materials | Or other alternative solvents |
|---|---|---|---|---|---|
| | Organic Solvent | 4. EtOH (Solvent 2) | 5~9(approx. optimized QOV(b)=8.0) | Solvent Media to Dissolve Electrode Materials | Or other alternative solvents |
| 2. Organic Additives | Dispersant | 5. TEA (Dispersant) | 1~2(approx. optimized QOV(b)=1.5) | Disperse Electrode Materials into Solvent Media | Or other alternative dispersants |
| | Plasticizer | 6. DBP (Plasticizer 1) | 0.5~2.0(approx. optimized QOV(b)=1.0) | Adjust green tape plasticity (high)/ viscosity (low)/ elastic coefficient (low) | Or other alternative plasticizers |
| | | 7. PEG (Plasticizer 2) | 0.5~2.0(approx. optimized QOV(b)=1.0) | Adjust green plasticity (low)/viscosity (high)/ elastic coefficient (high)/fracture strength (high) | Or other alternative plasticizers |
| | Binder | 8. PVB (Polyvinylbutyral) (Binder) | 3~6(approx. optimized QOV (b)=4.5) | Bonding strength/binding strength for electrolyte materials | Or other alternative binders |
| 3. Pore Former | | 9. Graphite (Pore Former) | 0.1~10 wt% of anode materials | Adjust porosity and gas permeability for anode substrate | Or other alternative pore formers |

4

Notes: a.: Compound Formulas are listed on Table 2; b.: QOV=Quasi-Optimum Value; c.: Other alternative organic additives can be used if necessary. The final tape casting slurry has viscosity range 100~1500 cp, which selection depends on green thickness; d.: other alternative electrolytes: GDC/YDC/SDC/LSGM et al.

Primary materials include a. electrode materials, 8YSZ as electrode materials and NiO+8YSZ as anode materials; b. organic additives, MEK and EtOH as organic solvents, TEA as dispersant, DBP and PEG as plasticizers, PVB as binder; c. graphite as pore former.

The weight percentages for materials in the recipes are also listed in Table 1. The compound formulas or ingredients are listed in Table 2.

Table 2: Major Compound Formulas or Ingredients

| Material Short Name | Chemical Formula (Representative Ingredient) | Note |
|---|---|---|
| YSZ | $(Y_2O_3)_{0.08}(ZrO_2)_{0.92}$ | |
| MEK | $CH_3COC_2H_5$ | |
| EtOH | $C_2H_5OH$ | |
| TEA | $C_6H_{15}NO_3$ | |
| DBP | $C_{16}H_{22}O_4$ | |
| PEG | $OH(C_2H_4O)_n H$ | |
| PVB | Polyvinyl Butyral | Chemical formula (NA) |
| GDC | $Gd_{0.2}Ce_{0.8}O_{1.9}$ | |
| YDC | $Y_{0.08}Ce_{0.92}O_{3\pm\delta}$ | |
| LSGM | $Lao._8Sr_{0.2}Ga_{0.85}Mg_{0.15}O_{3\pm\delta}$ | |
| LSM | $La_{0.8}Sr_{0.2}MnO_3$ | |
| LSCF | $La_{0.6}Sr_{0.4}Co_{0.2}Fe_{0.8}O_{3\pm\delta}$ | |
| LSC | Lanthanum Strontium Cobaltite | Chemical formula (NA) |
| LSF | Lanthanum Strontium Ferrite | Chemical formula (NA) |
| LSCM | $La_{0.8}Sr_{0.2}Co_{0.85}Mg_{0.15}O_{3\pm\delta}$ | |

For electrolyte substrate/layer recipe, its optimum composition in weight percentage is: 8YSZ (68wt%), MEK (17wt%), EtOH (7wt%), TEA (1.5wt%), DBP (1.0wt%), PEG (1.0wt%), PVB (4.5wt%) and pore former (0.wt%). Since the electrolyte layer requires "zero gas permeability and 100% tightness", there is no need of pore former. For anode substrate/layer recipe, the optimum composition is: NiO + 8YSZ (68wt%) (NiO/8YSZ has weight ratio 50/50 (approximately optimum value)), MEK (17wt%), EtOH (7wt%), TEA (1.5wt%), DBP (1.0wt%), PEG (1.0wt%), PVB (4.5wt%), pore former (graphite) (0.1~10 wt% of anode material). The amount of pore formers can be adjusted according to the porosity required by anode substrate. The weight percentage in Table 1 can be adjusted according to the powder characteristics of the electrode materials (pore diameter distribution and specific surface area et al.). The goal is to produce high uniformity and high quality green products with suitable operation parameters for tape casting (such as thickness/density/operational feasibility). The electrode materials and pore formers in the recipe need pretreatment. The primary process is to grind the electrode powder materials down to 200~300 nm by a ball mill (containing zirconium dioxide). Then, the powder materials, organic solvents and dispersants are ground together inside the ball mill for about 24~48 hours (adjustable to reduce grinding time) to attain uniformity. At last, plasticizers and binders are added to the ball mill for grinding for another 24~48 hours (adjustable to reduce grinding time) to attain complete uniformity and slurry. To attain the required green thickness, it is necessary to do fine adjustment of recipe and carryout viscosity measurement and adjustment. If the green thickness is 10~200 $\mu$m, the slurry viscosity is 100~1500 cp (depending on the original powder characteristics; experience and techniques are essential to process optimization), so the optimal viscosity will facilitate tape casting operation.

Tape casting process can achieve good quality green tape with good techniques and compliance to operation procedures for any specific equipment model.

(2) Process for Producing Electrode Substrate:

The green tape produced from previous (1) process is made into a single layer green product in certain size by punching/blanking. Then a number of green products are selected to go through inspection, stacking and Lamination Process (LP) to produce electrode green substrate-A with definite thickness and shape. The lamination process has temperature at 60~100˚C and pressure at 13.79~34.48MPa (2000- 5000 psi). At this time, the green substrate -A density is 40% of the theoretical density for the same ceramic oxides as the electrode materials. The green substrate -A will go to the second stage VHPS to produce green substrate-B. The process vacuum is $1.33 \times 10^{-7}$~$10^{-8}$MPa ($10^{-3}$~$10^{-4}$ torrs) and pressure is 1158.3MPa ($1.68 \times 10^5$ psi) (area = 9 cm$^2$) ~104.8MPa ($1.52 \times 10^4$ psi) (area = 100cm$^2$), and temperature is 500˚C. The density for this green substrate-B can reach 70% of the theoretical density for the same ceramic oxides as the electrode materials. Such two-stage vacuum heat lamination process is defined as Novel Synergistic Process (NSP). During LP stage, the green is placed freely on the pressboard. While during VHPS stage, the green is sealed and placed in the mold with definite size. The electrode green substrate through NSP process has high integrity. After calcinations/sintering, the electrode ceramic substrate has high integrity and extremely high mechanical strength. Further through other treatments or processes for other electrode layers (like cathode or electrolyte), such as screen-printing, sputtering coating, plasma coating/spraying, spin coating et al., the unit cell is produced with unique properties, including high mechanical strength (suitable for cell stack assembly and testing), high durability and stability. This is called "high integrity fuel cell membrane electrode assembly". By changing the amount of pore former, it is possible to adjust the content and microstructure for the anode substrate to vary the porosity between different layers, to increase gas permeability rate, to increase cell energy conversion efficiency and output powder density. Thus, the key technology to produce SOFC-MEA is developed to improve the product specification requirements and performance.

**Brief Description of the Drawings**

Figure 1 is a novel synergistic process for fabrication of a high integrity membrane electrode assembly of solid oxide fuel cell.

Figure 2 is a brief illustration for the vacuum hot press system (VHPS) in the invention.

Figure 3 is the structure diagram and actual object diagram for the planar SOFC Anode Supported Cell (ASC) in the invention.

Figure 4 is the slurry recipe and process for the fabrication of SOFC-MEA electrode substrate in the invention.

Figure 5 is the diagram of the slurry for the fabrication of high-integrity electrode green substrate in the invention.

Figure 6 is the diagram of the actual object of green tape of the high-integrity electrode substrate in the invention.

Figure 7 is the diagram of the actual object of the high-integrity green substrate of the electrode substrate in the invention.

Figure 8 is the diagram of the actual object of the high-integrity electrode substrate.

Figure 9 is the microstructure and property diagram for the high-integrity electrode substrate.

Figure 10 is the diagram of the actual object and the electric performance testing results for the SOFC-MEA (unit cell) produced from the high-integrity electrode substrate.

Detailed Description of the Preferred Embodiment

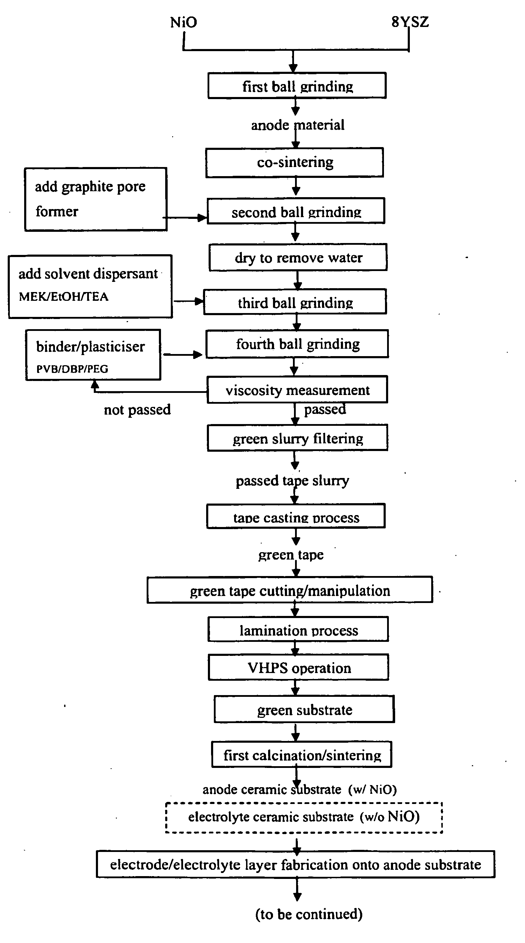

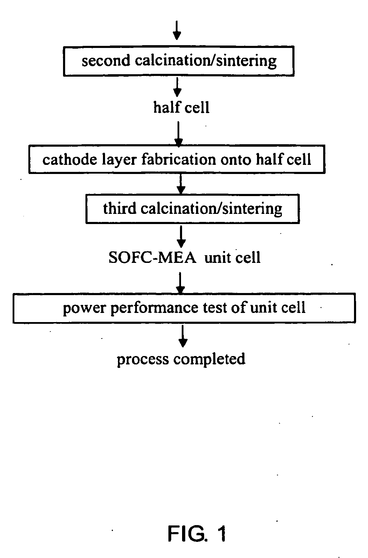

The invention is related to the recipe and novel processes for producing SOFC-MEA (refer to Figure 1 for the brief processes), a high integrity solid oxide fuel cell - membrane electrode assembly or unit cell. The main content in the invention includes "one recipe and two processes for producing green substrates and electrode ceramic substrate. The application methods are described below:

(1) Recipe slurry and processes for electrode green substrate. This part of invention at least includes the following steps:

Step 1: Add self-made or purchased 8YSZ and NiO powders in a certain weight ratio (NiO is 35~65 wt% of NiO+8YSZ; its QOV value is 50 wt%) and zirconium dioxide grinding balls into a jar for 24~168 (adjustable) hours of grinding to attain highly uniform powder mixture. Its uniformity can be judged by SEM analysis. If necessary, additional grinding time and speed are used. The average particle diameter is targeted at 300~500 nm (adjustable based on requirements). The powder is named Anode-P-1. Powder properties include particle diameter, specific area, and uniformity (EDX-Mapping), which are filed as references and review. This is the first work to prepare slurry for electrode green substrate. The main recipe is listed in Table 1. It is the first part of IP for the invention.

Step 2: The powder Anode-P-1 is taken out and placed in the zirconium dioxide plate which is then put in high-temperature furnace for co-sintering treatment at 1200~1600°C for 2~8 hours (adjustable). Then, it is subject to grinding by ball mill as in step 1, so this makes particle diameter around 300~500 nm (adjustable if necessary) and high uniformity. This kind of powder is called Anode-P-2. To adjust the porosity for the final substrate, a proper amount of pore former (graphite is a typical material) is added to Anode-P-2. Then it is subject to repeated grinding for a few hours (preferably over 24 hours) and becomes the powder called Anode-P-3.

Step 3: Take a certain amount of Anode-P-3 to dry at 100°C for several tens of hours (preferably over 24 hours, to remove moisture and water). According to the recipe in Table 1, take organic solvents MEK, EtOH in a certain ratio and dispersant TEA to add to grinding jar with zirconium dioxide ball for grinding for several tens of hours (preferably over 24 hours) to assure the system uniformity. This uniform slurry of solvent and dispersant is called SD.

Step 4: Add dried powder Anode-P-3 into SD slurry to grind in liquid state for several tens of hours (preferably over 48 hours), so this makes even mixing of powder, solvent and dispersant and produces the slurry called SL-1.

Step 5: according to Table 1 recipe, take a certain amount of plasticizer PEG and binder PVB to add into slurry SL-1. Continue the grinding for several tens of hours (about 48~72 hours) to assure complete system uniformity and the quality for anode substrate slurry that is suitable for tape casting process, called SL-2.Use viscometer to measure and note the viscosity for SL-2 and check it characteristics.

Step 6: Use micro-adjustment technique to add a proper amount of binder in different stage, while plasticizer can regulate SL-2 viscosity 150~1500 CP (QOV=200-500 CP). The recipe effect for this part depends on personal experience, technology and capability to determine the number and duration for trial and error operation. The final tape casting slurry is called SL-T$_o$

Step 7: Process slurry SL-T with tape casting system to produce green tape, which width depends on the requirement, generally around 18~30 cm. The single layer thickness is around 10 ~ 300 $\mu$m (whether to increase single layer thickness depending on the requirement and tape casting system performance).

Step 8: Use cutting tools or punch to cut green tape into single layer green tape in certain size and shape (usually square or circle). According to thickness requirement, send the stack of single layer green tapes into laminator (LM) to produce shaped green substrate (GT-1). The laminator (LP) pressure is set to 13.79~34.48MPa (2000-5000 psi), and temperature is 50-100°C. GT-1 thickness can be 100~1500 $\mu$m. Substrate thickness QOV = 600~1200$\mu$m. GT1 green density is measured by Pycnometer.

(2) Electrode Ceramic Substrate Fabrication Process

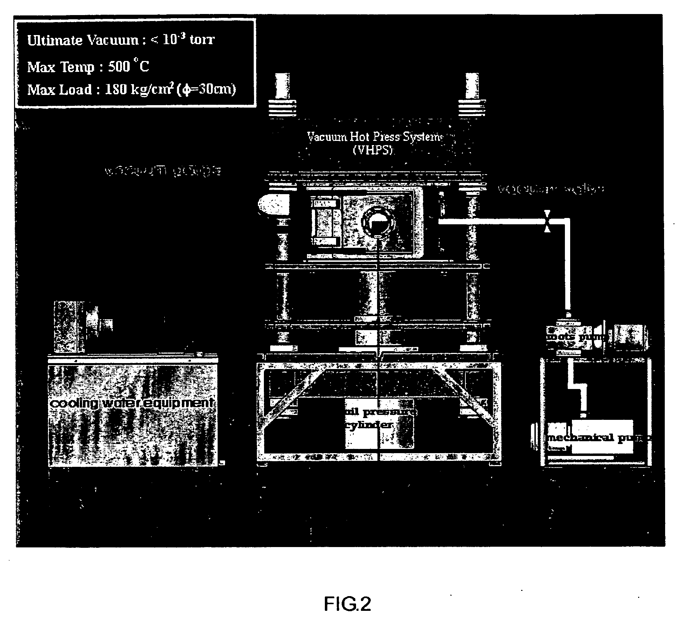

Step 1: Put green substrate (GT-1)(dimension $5{\times}5cm^2$~$15{\times}1cm^2$(or larger), thickness close to 600~1200 $\mu$m) in a mold of $5{\times}5$ cm$^2$ or suitable size. Send it to "vacuum hot press system (VHPS)(details as in Figure 2) for vacuum, less than $1.33{\times}10^{-7}$ MPa ($1{\times}10^{-3}$ torrs), heat (temperature < 500°C), and pressure up to 1158.3MPa ($1.68{\times}10^5$ psi) treatment. The high-density green substrate (GT-2) after this process has green density measured by Pycnometer and up to 70% of the theoretical density for the same ceramic oxides.

Step 2: If necessary, surface treatment for GT-2 can be done by LM lamination. Such substrate enhancing process by LM and VHPS is called A Novel Synergistic Process. The substrate made from the process is called GT-F.

Step 3: Press and position GT-F with zirconium dioxide substrate (in sandwich structure). Place it in a high temperature furnace with aluminum oxide/Zirconium oxide setters as support (temperature up to 1700˚C) for two-stage cyclic sintering process. The first cycle temperature control is: room temperature → 200˚C(4Hr) → 450˚C(2Hr) → 750˚C(2Hr) → 1250˚C (6Hr) → room temperature. And the second cycle temperature control is: room temperature → 1400˚C (4Hr) → room temperature. The increasing and decreasing rates for temperature are the same for the two stages and kept at 1˚C/min (preferably within 3˚C/min).

A certain amount of air is passed in. The first cycle sintering is to remove all organic additives. The second cycle sintering is to produce ceramic substrate by sintering and densification. The produced electrode substrate is called AS-1, which needs to be characterized for sintering density, mechanical strength, and porosity and microstructure et al. Such AS-1 electrode substrate has high mechanical strength, flatness, suitable porosity and gas permeability to satisfy the basic requirements of SOFC-MEA electrode structure.

Step 4: AS-1 is subject to Screen Printing, Sputtering Coating, Spin Coating or Plasma Spray. Then it is subject to coating with an electrode layer in less than 10 $\mu$m. It is put in high temperature sintering furnace (1400˚C/4Hr) with the increasing and decreasing rates for temperature at 1˚C/min to produce SOFC-MEA half cell, called AS-H.

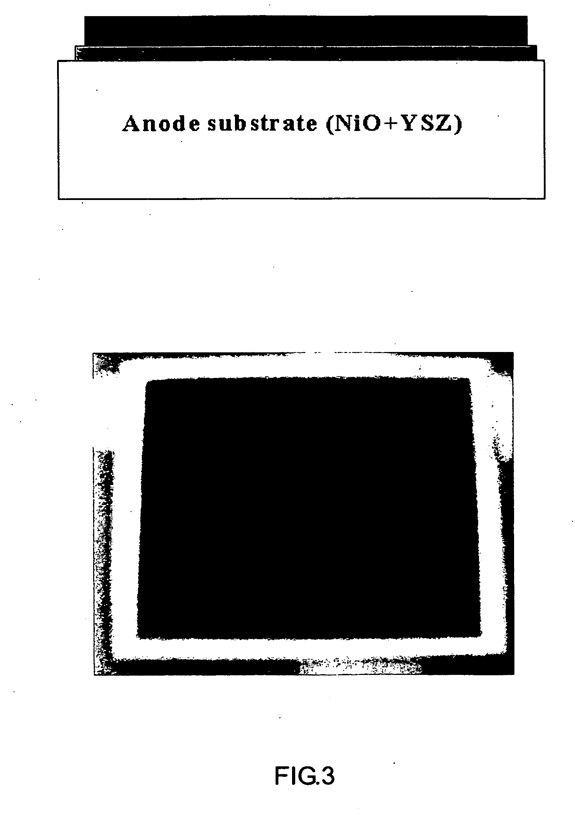

Step 5: AS-H half cell is subject to screen-printing for coating LSM (or LSCF material) cathode layer in 30~50 $\mu$m (adjustable) onto YSZ layer. Then it is put in a high-temperature sintering furnace (1200˚C/3~4Hr) with the increasing and decreasing rates for temperature at 1˚C/min (preferably less than 3˚C/min). The product is called ASC-I, which is anode support cell (also called ASC type SOFC-MEA)(details as shown in Figure 3 for multiple/functional layer anode substrate (NiO+YSZ)).

The ASC type SOFC from the above processes can convert a variety of fuels like hydrogen, natural gas and hydrocarbons into electric output. The following will describe some examples in details for the invention:

Example 1: production of SOFC anode substrate and unit cell with high mechanical strength and suitable porosity (20~30vol %)

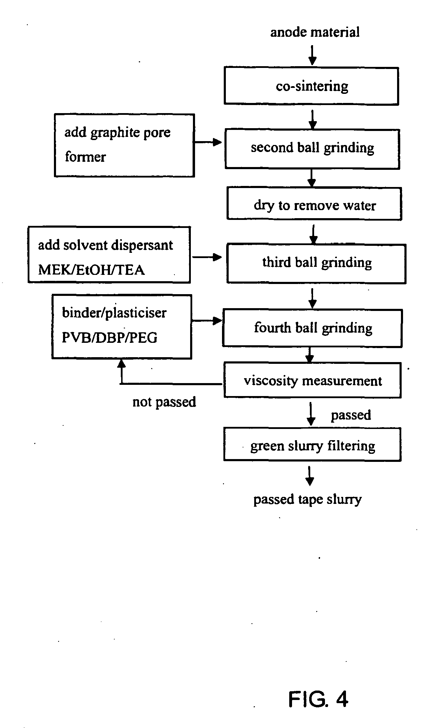

The example is about production of a planar SOFC anode substrate with high mechanical strength and suitable porosity (20~30vol %) and its unit cell for powder supply test and powder generation. The production includes two stages. The first stage is about (1) NiO + YSZ anode green substrate slurry recipe and processes, including 8 steps in total, and (2) anode ceramic substrate production process, 5 steps in total, which are described respectively in the following:
(1) NiO + 8YSZ anode green substrate slurry recipe and processes consist of the following steps (as shown in Figure 4):

Step 1: Mix 175 grams of 8YSZ with cubic crystal structure and equal amount of NiO (average particle diameter 1000 nm) and place them in ajar containing $ZrO_2$ grinding balls (about 250 grams) for 168 hours of grinding. This allows complete mixing of NiO and 8YSZ to become highly uniform powder mixture. SEM can analyze its uniformity. If necessary, additional grinding time and speed can be used. The goal of grinding is to get particle diameter 300~500 nm. The powder is called Anode-P-1. Powder properties include particle diameter, specific surface area, and uniformity (EDX-Mapping), which are filed as references and review.

Step 2: Take powder Anode-P-1 out of a grinding jar and place it in a zirconium dioxide plate which will be put in a high-temperature sintering furnace at 1400˚C/4 hours for co-sintering. After that, repeat step 1 grinding process to make particle diameter 300~500 nm and uniform. This co-sintered powder is called Anode-P-2. Add 3.5 grams of sub-micrometer/ nanometer graphite powder into Anode-P-2 and repeat grinding for over 24 hours to assure high uniformity. The powder is called Anode-P-3. It total weight is 353.5 grams.

Step 3: Take 353.5 grams of Anode-P-3 and dry it at 100˚C for over 24 hours to remove water and moisture. Weigh 78.1 grams of MEK, 25.27 grams of EtOH and 8.05 grams of TEA into a grinding jar containing $ZrO_2$ Ball for grinding for over 24 hours to assure uniformity. The solvents and dispersant are liquid and the mixture is called SD solution, which total weight is 111.42 grams.

Step 4: Add dried Anode-P-3 powder into SD solution and grind in liquid state for over 48 hours. This allows powder, solvents and dispersant to mix uniformly into slurry, called SL-1, which total weight is 464.92 grams.

Step 5: Weigh 4.59 grams of DBP plasticizer, 4.59 grams of PEG and 19.55 grams of PVB binder into slurry SL-1. Continue grinding in liquid state for over 48 hours to assure system uniformity. The product is the anode substrate slurry suitable for tape casting process and called SL-2 which total weight is 463.65 grams. Then, viscometer is used to measure and note the viscosity of SL-2 and inspect SL-2 properties.

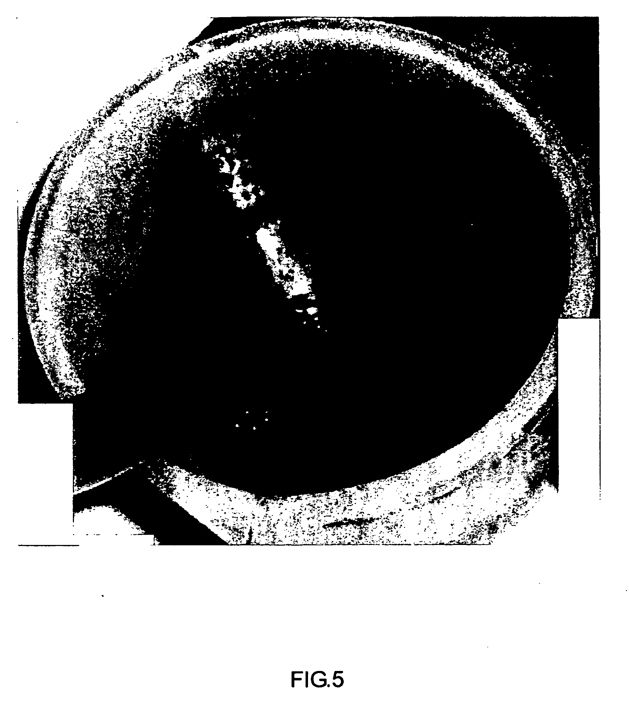

Step 6: To make fine adjustment, suitable amount of PVB binder is added in different stages with plasticizer DBP/PEG to regulate the viscosity of SL-2 around 150~1500 cp (optimum viscosity around 200~500 cp). At the same time, inspect formability for the green tape. This adjustment depends on personal experience and technique/capability for the time and number of trial and error. The final tape slurry or slip slurry is called SL-T. Its viscosity is about 328 cp (as shown in Figure 5).

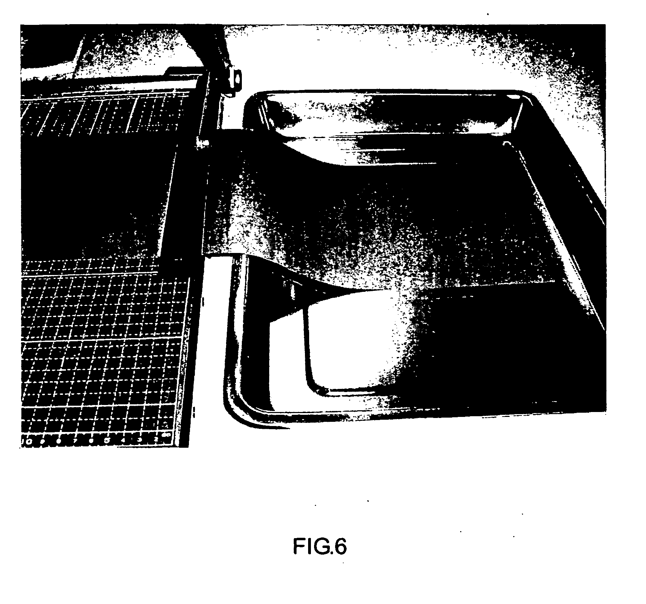

Step 7: Process tape slurry SL-7 with tape casting system to produce green tape, which width depends on the suitability for specific tape casting system, between 18 and 20 cm. The single layer thickness is about 100 $\mu$m. The length is determined by the amount of Anode-P-1 feeding powder (as shown in Figure 6).

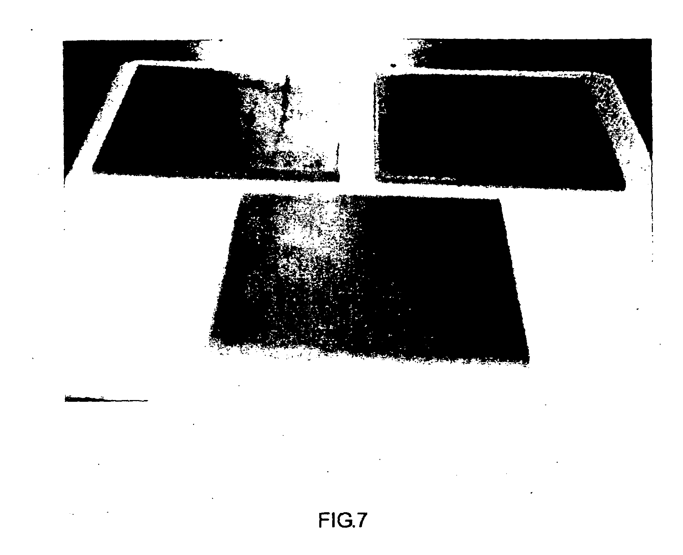

Step 8: Use cutting tools or punch to cut green tape into single layer green tape in $5\times5cm^2$ or $10\times10cm^2$ (adjustable in size and shape) with thickness 100 $\mu$m. Send the stack of 12 single layer green tapes into high-pressure laminator (LM) to produce shaped (square) green substrate (GT-1) with thickness 1200 $\mu$m. The pressure for the laminator in this step is set at 13.79~34.48MPa (2000~5000 psi), temperature at 50~100˚C. The green density for GT1 is measured by Pycnometer (details as shown in Figure 7).

(2) The fabrication process for anode ceramic substrate consists of the following steps:

Step 1: Place green substrates GT1 (square with dimensions $5\times5$ cm$^2$ and $10\times10$ cm$^2$, thickness 1200 $\mu$m) into a $5\times5cm^2$ mold and a $10\times10cm^2$ mold respectively (mold material is stainless steel, plated with WC). Then send them to vacuum hot press system (VHPS) for further treatment (vacuum less than $1.33\times10^{-7}$ MPa ($1\times10^{-3}$torrs), temperature < 500˚C). Its pressure is up to 1158.3MPa ($1.68\times10^5$ psi) (adjustable). The high-density green substrate from the process (called GT-2) has green density measured by Pycnometer, and up to 70% of the theoretical density of the same ceramic oxides.

Step 2: If necessary, further surface finishing for GT-2 can be done through LM lamination. Such process using LM and VHPS to enhance green substrate strength is called "a novel synergistic process". The finished product from the process is called GT-F. The size of GT-F is determined by the product requirement and the VHPS mold size.

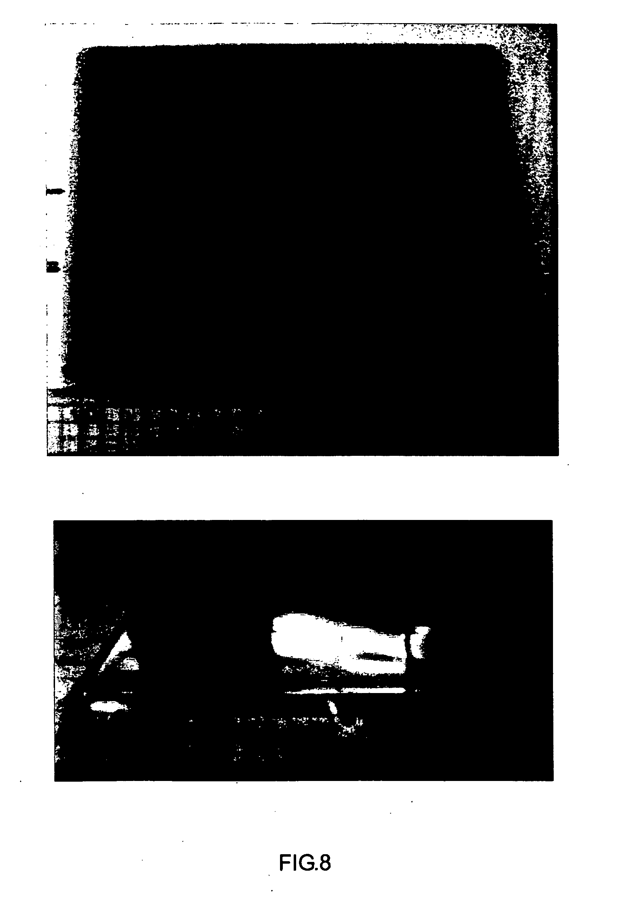

Step 3: Use zirconium dioxide substrates to press GT-F (in sandwich structure) and place it in a zirconium dioxide support plate in a high-temperature furnace (temperature up to 1700 ˚C) for a two-stage, cyclic sintering process. The first cycle temperature control is room temperature $\rightarrow$ 200˚C (4Hrs) $\rightarrow$ 450˚C (2 hrs) $\rightarrow$ 750˚C (2 hrs) $\rightarrow$ 1250˚C (6 hrs) $\rightarrow$ room temperature. The second cycle temperature control is room temperature $\rightarrow$ 1400˚C (4 hrs) $\rightarrow$ room temperature. The increasing and decreasing rates for temperature for the two stages are kept at 1˚C/min (preferably within 3 ˚C/min). A certain amount of air is also supplied to the system. The produced electrode substrate is called AS-1 (Figure 8), which properties are shown in Table 3.

Table 3: Properties of Anode Substrate

| Property | Description |
|---|---|
| 1. size | $L\times W\times H$ (Thickness) = $50mm\times50mm\times1000\mu m$ & $100mm\times100mm\times1000\mu m$ |
| 2. shape | Planar/ high flatness |
| 3. mechanical strength | a. 67.1Mpa (T=25˚C) <br> 82.91 Mpa (T=700˚C) <br> 76.17Mpa high flatness (T=800˚C) |
| 4. porosity (T=25˚C) | a. initial value =14.534 % <br> b. value after H2 reduction =26.1187 % |
| 5. air/gas permeability (T=25˚C), initial value | $16.53cm^3/Mpa\text{-}cm^2\text{-}sec(1.14\times10^{-4}$ $l/psi\text{-}cm^2\text{-}sec)$ |

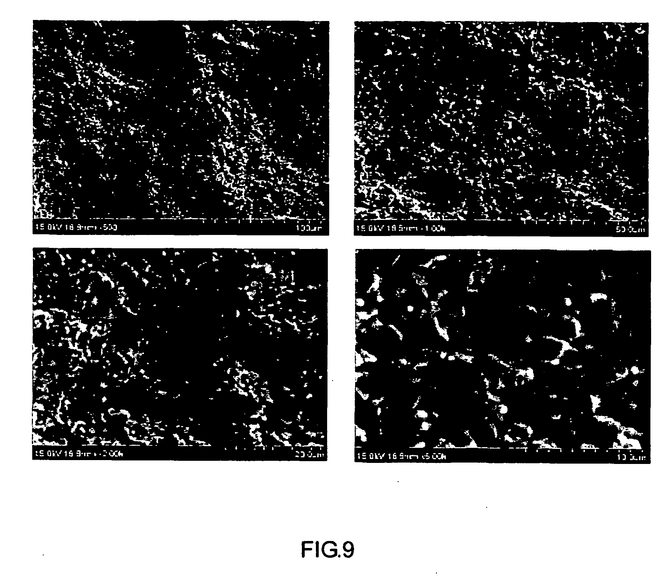

It shows AS-1 anode substrate has high mechanical strength and surface flatness as well as suitable amount of porosity and gas permeability, which satisfy SOFC-MEA anode structural requirements (as shown in Figure 9).

Step 4: Use screen printing/spin coating/sputter coating equipments and processes to coat about 10 $\mu$m electrolyte (8YSZ material) layer onto the anode substrate AS-1 and place it in a high-temperature furnace at 1700˚C for sintering at 1400˚C/4hrs, with increasing and decreasing rates of temperature 1˚C/min. The SOFC-MEA half cell from the process is called AS-H.

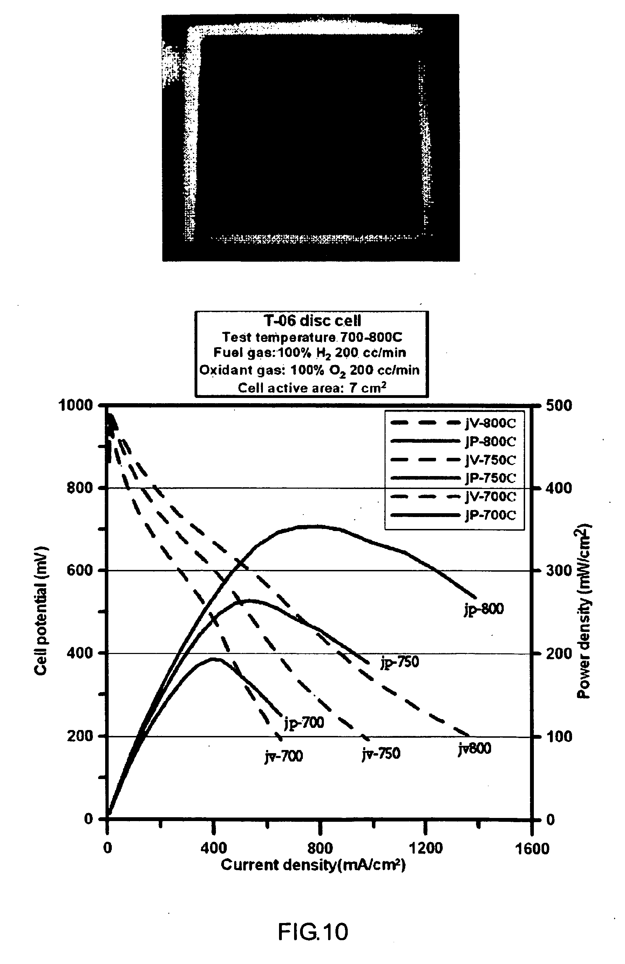

Step 5: Use screen-printing equipment and process to coat about 40 $\mu$m LSM layer onto the 8YSZ electrolyet layer of the AS-H half cell to produce a full cell, called AS-WC. Place AS-WC in the high-temperature furnace for another sintering process (1200˚C/3hrs) with increasing and decreasing rates of temperature at 1˚C/min. The produced SOFC-MEA is called AS-C-I (details in Figure 10), which a complete anode supported cell (also called ASC type SOFC-MEA). On ASC-I, the electric powder density measured by a simple Probostat System can be up to 32 mW/cm$^2$ (test area = $\pi$cm$^2$, temperature = 900˚C). If the test area is 4x4cm$^2$, the electric powder density is larger than 350 mW/cm$^2$ (temperature at 800˚C) (prototype MEA not optimized product).

**Claims**

1. A method for fabrication of membrane electrode assembly of solid oxide fuel cell (MEA-SOFC) including: 1) slurry recipe and process for producing electrode green substrate and 2) fabrication process for electrolyte or electrode ceramic substrate, comprising steps:

   1) Slurry recipe and process for producing electrode green substrate:

   (a) Add relevant powder material 8YSZ and NiO for anode substrate, and 8YSZ for electrolyte substrate in a jar containing zirconium dioxide grinding balls for grinding to attain initial uniformity and particle diameter standardization of all powder materials;
   (b) Place the powder from step a in high-temperature furnace for co-sintering treatment to attain solid uniformity, and then take out the powder to proceed to grinding with zirconium dioxide grinding balls at room temperature, and an amount of pore former is added to attain a second time uniformity of all powder materials, and then dry to remove moisture and water;
   (c) Take organic solvents, for example, MEK, EtOH and dispersant, for example, TEA to add in the product of step b for grinding with zirconium dioxide ball to assure uniformity of the uniform liquid state of the solvent and dispersant;
   (d) Add the product of step c to the powder of step b, for grinding with zirconium dioxide ball to make even mixing of powder and solvent/dispersant, and dissolve/disperse into slurry;
   (e)Take a certain amount of plasticizer, for example, DBP, PEG and binder, for example, PVB to add into the slurry, proceed the grinding with zirconium dioxide ball to assure the uniformity;
   (f) Add an amount of binder and plasticizer in tape slurry before carrying out tape casting operation;
   (g) Process the tape slurry with a tape casting equipment to produce green tape;
   (h)Cut the green tape into single layer green tape, which are laminated and aligned in thickness to produce shaped green substrate;

   2) Fabrication process for electrolyte or electrode ceramic substrate

   (i) Put green substrate produced in step (h) in a metal mold of same size, deliver it to vacuum hot press system (VHPS) for treatment with vacuum, less than 1.33×10$^{-7}$ MPa (1×10$^{-3}$ torrs), heat temperature < 500˚C, and pressure up to 1158,3MPa (1.68×10$^5$ psi)), to produce high-density green substrate (HDGS);
   (j) Surface treatment for HDGS can be done by LM lamination, such substrate enhancing process by LM and VHPS alternately is called a novel synergistic process, the substrate made from the process is called high integrity green substrate (HIGS);
   (k) Press and position HIGS with zirconium dioxide ceramic substrate in sandwich structure under constant temperature, place it in a high temperature furnace with aluminum oxide /Zirconium oxide setters as support with temperature up to 1700˚C for two-stage cyclic sintering process, the first cycle is to remove all organic additives and pore former ;
   (l) The electrode substrate is subject to screen printing, sputtering coating, spin coating or plasma spray for coating with an electrode layer for electrolyte ceramic substrate and/or electrolyte layer for anode ceramic substrate, and put it in high temperature sintering furnace to produce SOFC-MEA half cell (HC);
   (m) HC half cell is subject to screen-printing, sputtering coating, spin coating, plasma spray or slurry spray for coating LSM and/or LSCF material cathode layer, and put in a high-temperature furnace for sintering to produce SOFC-MEA unit cell.

2. A method for fabrication of membrane electrode assembly of solid oxide fuel cell (MEA-SOFC) of claim 1, wherein QOV value of 8YSZ is 68.0, NiO/8YSZ is 68.0" and the weight ratio of NiO in NiO+8YSZ is 35~65 wt%.

3. A method for fabrication of membrane electrode assembly of solid oxide fuel cell (MEA-SOFC) of claim 1, wherein the ball grinding time in step (a) of slurry recipe and process for producing electrode green substrate includes 24~168 hours, and the targeted average particle diameter of ground powder includes 300-500nm.

4. A method for fabrication of membrane electrode assembly of solid oxide fuel cell (MEA-SOFC) of claim 1, wherein the high temperature for co-sintering in step (b) of slurry recipe and process for producing electrode green substrate includes 1200~1600˚C, and the ball grinding time and targeted average particle diameter include 24 hours above and 300~500 nm, respectively, and the added pore formers include graphite powder of nanometer or micrometer size, depending on the porosity required by the substrate to be formed.

5. A method for fabrication of membrane electrode assembly of solid oxide fuel cell (MEA-SOFC) of claim 1, wherein the ball grinding time in step (c) of slurry recipe and process for producing electrode green substrate includes 24 hours and above.

6. A method for fabrication of membrane electrode assembly of solid oxide fuel cell (MEA-SOFC) of claim 1, wherein the ball grinding time in step (d) of slurry recipe and process for producing electrode green substrate includes 48 hours and above.

7. A method for fabrication of membrane electrode assembly of solid oxide fuel cell (MEA-SOFC) of claim 1, wherein the ball grinding time in step (e) of slurry recipe and process for producing electrode green substrate includes 48~72 hours.

8. A method for fabrication of membrane electrode assembly of solid oxide fuel cell (MEA-SOFC) of claim 1, wherein the substrate slurry viscosity in step (f) of slurry recipe and process for producing electrode green substrate includes between 150~1500CP.

9. A method for fabrication of membrane electrode assembly of solid oxide fuel cell (MEA-SOFC) of claim 1, wherein the specification of the green tape in step (g) of slurry recipe and process for producing electrode green substrate includes width of 18~30 cm and thickness of 10~300 $\mu$m.

10. A method for fabrication of membrane electrode assembly of solid oxide fuel cell (MEA-SOFC) of claim 1, wherein the shape of green tape in step (h) of slurry recipe and process for producing electrode green substrate includes round or square, the size of green tape includes $5\times5cm^2$~$15\times15$ cm$^2$, the operation temperature and pressure of laminator includes 50-100˚C and 13.79~34.48 MPa (2000~5000 psi), respectively, and the thickness of green tape formed includes 600~1200$\mu$ m,.

11. A method for fabrication of membrane electrode assembly of solid oxide fuel cell (MEA-SOFC) of claim 1, wherein the operation temperature and pressure of vacuum hot press sintering system in step (i) of the fabrication process for electrode or electrolyte ceramic substrate includes <500˚Cand 1158.3MPa ($1.68\times10^5$ psi), respectively, and the vacuum includes $1.33\times10^{-7}$ NWa ($1.0\times10^{-3}$ torrs),

12. A method for fabrication of membrane electrode assembly of solid oxide fuel cell (MEA-SOFC) of claim 1, wherein the lamination operation in step (j) of the fabrication process for electrode or electrolyte ceramic substrate includes second lamination,

13. A method for fabrication of membrane electrode assembly of solid oxide fuel cell (MEA-SOFC) of claim 1, wherein first cycle sintering process in step (k) of the fabrication process for electrode or electrolyte ceramic substrate includes temperature control: room temperature $\rightarrow$200˚C ( 4 hrs ) $\rightarrow$450˚C ( 2hrs ) $\rightarrow$750˚C ( 2hrs ) $\rightarrow$1250˚C (6hrs ) $\rightarrow$room temperature, and second cycle sintering process includes temperature control: room temperature $\rightarrow$1400˚C ( 4hrs ) $\rightarrow$ room temperature, the temperature increment/decrement control rate of the two cycle sintering process includes 1˚C/min, preferably below 3˚C/min.

14. A method for fabrication of membrane electrode assembly of solid oxide fuel cell (MEA-SOFC) of claim 1, wherein the thickness of electrolyte layer in step (1) of the fabrication process for electrode or electrolyte ceramic substrate includes 10$\mu$m, the product sintering process includes temperature control: room temperature $\rightarrow$ 1400˚C ( 4hrs ) $\rightarrow$ room temperature, the temperature increment/decrement control rate of the sintering process includes 1˚C/min, preferably below 3˚C/min.

**15.** A method for fabrication of membrane electrode assembly of solid oxide fuel cell (MEA-SOFC) of claim 1, wherein the material and thickness of cathode layer in step (m) of the fabrication process for electrode or electrolyte ceramic substrate includes LSM/LSCF and 30~50 $\mu$m, respectively, the product sintering process includes temperature control: room temperature → 1200˚C ( 3hrs ) → room temperature, the temperature increment/decrement control rate of the sintering process includes 1˚C/min, preferably below 3˚C/min.

**Patentansprüche**

**1.** Eine Methode zum Herstellen einer Membranelektrodenzusammensetzung aus festen Oxidbrennstoffzellen (MEA-SOFC), einschließlich: 1) ein Schlammrezept und ein Vorgang zur Erzeugung eines grünen Elektrodensubstrates, und 2) ein Verfahren zur Herstellung eines Elektrolyten- oder Elektrodenkeramiksubstrates, die die folgenden Schritte umfassen:

1) Das Schlammrezept und ein Vorgang zur Erzeugung eines grünen Elektrodensubstrates:

(a) Beimischen eines relevanten Pulvermaterials 8YSZ, NiO für das Anodensubstrat und 8YSZ für das Elektrolytensubstrat in einem Gefäss, in dem Zerreibkügelchen aus Zirconiumdioxid zum Zerreiben enthalten sind, um eine anfängliche Gleichmäßigkeit sowie um einen einheitlichen Durchmesser der Partikel aller Pulvermaterialien zu erhalten.
(b) Zum Erreichen einer festen Gleichmäßigkeit des in Schritt a beschriebenen Pulvers muss dieses in einen Hochtemperaturofen für die Kosinterbehandlung gestellt werden; danach das Pulver herausnehmen und mit den Zerreibkügelchen aus Zirconiumdioxid bei Raumtemperatur zerreiben, wonach eine Menge an Porenbildungsmittel beigemischt wird, um eine zweitmalige Gleichmäßigkeit aller Pulvermaterialien zu erhalten; danach trocknen, um die Feuchtigkeit und das Wasser entziehen zu lassen.
(c) Die organischen Lösungsmittel, beispielsweise MEK, EtOH und ein Dispersionsmittel, z. B. TEA, wie in Schritt b beschrieben beimischen und diese mit den Kügelchen aus Zirconiumdioxid zerreiben, um die Gleichmäßigkeit des uniformen flüssigen Zustandes des Lösungsmittels und des Dispersionsmittels sicherzustellen.
(d) Das in Schritt c erhaltene Produkt dem in Schritt b erzeugte Pulver zum Zerreiben mit den Zerreibkügelchen aus Zirconiumdioxid beigeben, um eine gleichmäßige Mischung des Pulvers mit dem Lösungsmittel/Dispersionsmittel zu erhalten und danach in Schlamm auflösen/dispergieren lassen.
(e) Eine bestimmte Menge von Weichmacher, z. B. DBP, PEG, und Bindemittel, z. B. PVB, dem Schlamm beimischen und mit den Zerreibkügelchen aus Zirconiumdioxid zum Erhalten der Gleichmäßigkeit zerreiben.
(f) Vor dem Durchführen des Bandgießverfahrens dem Bandschlamm eine Menge an Bindemittel und Weichmacher beigeben.
(g) Den Bandschlamm mit einer Bandgießvorrichtung verarbeiten, um ein grünes Band zu erhalten.
(h) Danach das grüne Band in ein einschichtiges grünes Band schneiden, das dann laminiert und nach seiner Dicke abgeglichen wird, um das geformte grüne Substrat herzustellen.

2) Herstellverfahren des Elektrolyten- oder Elektrodenkeramiksubstrates

(i) Das in Schritt (h) erzeugte grüne Substrat in eine Metallform einer gleichen Größe eingeben und in eine Vakuumheißpreßanlage (VHPS) für die Vakuumbehandlung, mit einem Druck unterhalb 1,33×10$^{-7}$ MPa (1×10$^{-3}$ torrs), einer Wärmetemperatur von < 500˚C und mit einem Druck bis zu 1158,3 MPa (1,68×10$^5$ psi)) geben, um das grüne Substrat mit hoher Dichte (HDGS) zu erhalten.
(j) Die Oberflächenbehandlung für HDGS kann mit Hilfe der LM-Laminierung erfolgen. Ein solcher Substratverstärkungsprozess abwechselnd mit LM und VHPS ist als einen neuartigen synergistischen Prozess bekannt, wobei das mit diesem Prozess produzierte Substrat als ein grünes Hochintegritätssubstrat (HIGS) bezeichnet wird.
(k) Das HIGS zwischen das Keramiksubstrat aus Zirconiumdioxid unter konstantem Druck einpressen und positionieren und in einen Hochtemperaturofen mit Aluminiumoxid / Zirconiumoxidabbindern als Trägermaterial bei einer Temperatur bis zu 1700˚C für das zweistufige zyklische Sinterverfahren geben. Während dem ersten Zyklus werden sämtliche organische Zusarzstoffe und Porenbildungsmittel entfernt.
(l) Das Elektrodensubstrat wird zum Beschichten mit einer Elektrodenschicht für das Elektrolytenkeramiksubstrat und/oder Elektrolytenschicht für das Anodenkeramiksubstrat einem Siebdruckverfahren, Sprühbeschichten, Spinbeschichten oder Plasmasprühen unterzogen und zum Erzeugen von SOFC-MEA-Halbzellen (HC) in einen Hochtemperatursinterofen gegeben.

(m) Die HC-Halbzelle wird zum Beschichten der LSM- und/oder LSCE-Materialkathodenschicht einem Siebdruckverfahren, Sprühbeschichten, Plasmasprühen oder Schlammsprühen unterzogen und für das Sintern zum Erzeugen einer SOFC-MEA-Elementarzelle in einen Hochtemperaturofen gegeben.

2. Eine Methode zum Herstellen einer Membranelektrodenzusammensetzung aus festen Oxidbrennstoffzellen (MEA-SOFC) nach Anspruch 1, **dadurch gekennzeichnet, dass** der QOV Wert von 8YSZ = 68,0 beträgt, NiO/8YSZ = 68,0 beträgt und das Gewichtsverhältnis von NiO in NiO+8YSZ = 35 bis 65 wt% beträgt.

3. Eine Methode zum Herstellen einer Membranelektrodenzusammensetzung aus festen Oxidbrennstoffzellen (MEA-SOFC) nach Anspruch 1, **dadurch gekennzeichnet, dass** die Zeitdauer zum Zerreiben mit den Kügelchen in Schritt (a) des Schlammrezeptes und des Verfahrens zum Erzeugen des grünen Elektrodensubstrates 24 bis 168 Stunden dauert und der angesetzte durchschnittliche Partikeldurchmesser des gemahlten Pulvers 300 nm bis 500 nm beträgt.

4. Eine Methode zum Herstellen einer Membranelektrodenzusammensetzung aus festen Oxidbrennstoffzellen (MEA-SOFC) nach Anspruch 1, **dadurch gekennzeichnet, dass** die Hochtemperatur zum Kosintern in Schritt (b) des Schlammrezeptes und des Verfahrens zum Erzeugen des grünen Elektrodensubstrates 1200˚C bis 1600˚C beträgt, während die Dauer zum Zerreiben mit den Zerreibkügelchen sowie der angesetzte durchschnittliche Partikeldurchmesser 24 Stunden und länger dauert bzw. 300 nm bis 500 nm beträgt und die beigemischten Porenbildungsmittel aus einem Graphitpulver in Nanometer- oder Mikrometergröße mit je nach der für das zu herzustellende Substrat erforderlichen Porosität bestehen.

5. Eine Methode zum Herstellen einer Membranelektrodenzusammensetzung aus festen Oxidbrennstoffzellen (MEA-SOFC) nach Anspruch 1, **dadurch gekennzeichnet, dass** die Dauer zum Zerreiben mit den Zerreibkügelchen in Schritt (c) des Schlammrezeptes und des Verfahrens zum Erzeugen des grünen Elektrodensubstrates 24 Stunden und länger dauert.

6. Eine Methode zum Herstellen einer Membranelektrodenzusammensetzung aus festen Oxidbrennstoffzellen (MEA-SOFC) nach Anspruch 1, **dadurch gekennzeichnet, dass** die Dauer zum Zerreiben mit den Zerreibkügelchen in Schritt (d) des Schlammrezeptes und des Verfahrens zum Erzeugen des grünen Elektrodensubstrates 48 Stunden und länger dauert.

7. Eine Methode zum Herstellen einer Membranelektrodenzusammensetzung aus festen Oxidbrennstoffzellen (MEA-SOFC) nach Anspruch 1, **dadurch gekennzeichnet, dass** die Dauer zum Zerreiben mit den Zerreibkügelchen in Schritt (e) des Schlammrezeptes und des Verfahrens zum Erzeugen des grünen Elektrodensubstrates 48 bis 72 Stunden und länger dauert.

8. Eine Methode zum Herstellen einer Membranelektrodenzusammensetzung aus festen Oxidbrennstoffzellen (MEA-SOFC) nach Anspruch 1, **dadurch gekennzeichnet, dass** die Viskosität in Schritt (f) des Schlammrezeptes und des Verfahrens zum Erzeugen des grünen Elektrodensubstrates zwischen 150 bis 1500 CP beträgt.

9. Eine Methode zum Herstellen einer Membranelektrodenzusammensetzung aus festen Oxidbrennstoffzellen (MEA-SOFC) nach Anspruch 1, **dadurch gekennzeichnet, dass** die Spezifikation des grünen Bandes in Schritt (g) des Schlammrezeptes und des Verfahrens zum Erzeugen des grünen Elektrodensubstrates eine Breite von 18 cm bis 30 cm und eine Dicke von $10\mu m$ bis $300\mu m$ beträgt.

10. Eine Methode zum Herstellen einer Membranelektrodenzusammensetzung aus festen Oxidbrennstoffzellen (MEA-SOFC) nach Anspruch 1, **dadurch gekennzeichnet, dass** die Form des grünen Bandes in Schritt (h) des Schlammrezeptes und des Verfahrens zum Erzeugen des grünen Elektrodensubstrates rund oder quadratisch ist, die Größe des grünen Bandes $5\times5$ cm$^2$ bis $15\times15$ cm$^2$ beträgt, und Betriebstemperatur und der Druck der Laminiervorrichtung 50˚C bis 100˚C bzw. 13,79 bis 34,48 MPa (2000 bis 5000 psi) und die Dicke des gebildeten grünen Bandes 600 $\mu m$ bis 1200$\mu m$ beträgt.

11. Eine Methode zum Herstellen einer Membranelektrodenzusammensetzung aus festen Oxidbrennstoffzellen (MEA-SOFC) nach Anspruch 1, **dadurch gekennzeichnet, dass** die Betriebstemperatur und der Druck der Vakuumheißpreßanlage in Schritt (i) des Verfahrens zum Herstellen eines Elektrolyten- oder Elektrodenkeramiksubstrates < 500˚C bzw. 1158,3MPa ($1,68\times10^5$ psi) und das Vakuum $1,33\times10^{-7}$ MPa ($1,0\times10^{-3}$ torrs) beträgt.

**12.** Eine Methode zum Herstellen einer Membranelektrodenzusammensetzung aus festen Oxidbrennstoffzellen (MEA-SOFC) nach Anspruch 1, **dadurch gekennzeichnet, dass** die Laminierung in Schritt (j) des Herstellverfahrens des Elektrolyten- oder Elektrodenkeramiksubstrates eine zweite Laminierung einschließt.

**13.** Eine Methode zum Herstellen einer Membranelektrodenzusammensetzung aus festen Oxidbrennstoffzellen (MEA-SOFC) nach Anspruch 1, **dadurch gekennzeichnet, dass** beim ersten Zyklus des Sinterverfahrens in Schritt (k) des Herstellverfahrens des Elektrolyten- oder Elektrodenkeramiksubstrates die Temperaturregelung folgendes bedeutend ist: Raumtemperatur → 200˚C (4 Std.) → 450˚C (2 Std.) → 750˚C (2 Std.) → 1250˚C (6 Std.) → Raumtemperatur, während beim zweiten Zyklus des Sinerverfahrens die folgende Temperaturregelung wesentlich ist: Raumtemperatur → 1400˚C (4 Std.) → Raumtemperatur, wobei die Regelungsrate der Steigerung/des Abfalls der Temperatur der beiden Zyklen des Sinterverfahrens 1˚C/Min., vorzugsweise unterhalb 3˚C/Min. beträgt.

**14.** Eine Methode zum Herstellen einer Membranelektrodenzusammensetzung aus festen Oxidbrennstoffzellen (MEA-SOFC) nach Anspruch 1, **dadurch gekennzeichnet, dass** die Dicke der Elektrolytenschicht in Schritt (1) des Verfahrens zum Herstellen eines Elektrolyten- oder Elektrodenkeramiksubstrates 10 $\mu$m beträgt und beim Sinterverfahren des Produkts die Temperaturregelung mit berücksichtigt wird: Raumtemperatur → 1400˚C (4 Std.) → Raumtemperatur, wobei die Regelungsrate der Steigerung/des Abfalls der Temperatur Sinterverfahrens 1˚C/Min., vorzugsweise jedoch unterhalb 3˚C/Min. beträgt.

**15.** Eine Methode zum Herstellen einer Membranelektrodenzusammensetzung aus festen Oxidbrennstoffzellen (MEA-SOFC) nach Anspruch 1, **dadurch gekennzeichnet, dass** das Material und die Dicke der Kathodenschicht in Schritt (m) des Verfahrens zum Herstellen eines Elektrolyten- oder Elektrodenkeramiksubstrates LSM/LSCF bzw. 30 $\mu$m bis 50 $\mu$m mit einschließt, beim Sinterverfahren des Produkts die Temperaturregelung folgendes umfaßt: Raumtemperatur → 1200˚C (3 Std.) → Raumtemperatur, wobei die Regelungsrate der Steigerung/des Abfalls der Temperatur des Sinterverfahrens 1˚C/Min., vorzugsweise jedoch unterhalb 3˚C/Min. beträgt.

**Revendications**

**1.** Une méthode pour la fabrication d'un assemblage d'électrodes à membrane avec une cellule à carburant d'oxyde (MEA-SOFC) incluant : 1) une recette et un procédé à boue pour produire un substrat vert d'électrode et 2) un processus de fabrication pour un substrat en céramique pour électrode ou électrolyte, comprenant les étapes suivantes:

1) une recette et un procédé à boue pour produire un substrat vert d'électrode:

(a) Ajouter une matériel à poudre 8YSZ et NiO pour un substrat anode et 8YSZ pour un substrat électrolyte dans un récipient contenant des boules à broyer en dioxyde de zirconium pour broyer et atteindre l'uniformité initiale la standardisation du diamètre des particules de tous les matériaux à poudre;

(b) Placer la poudre dans une fournaise à haute température pour le traitement d'agglomération et atteindre l'uniformité solide, puis sortez la poudre pour effectuer le broyage avec les boules à broyer en dioxyde de zirconium à la température ambiante; une quantité de pore précédent est ajoutée pour atteindre une seconde uniformité de tous les matériaux à poudre, puis sécher et enlever l'humidité et l'eau;

(c) Prendre un solvant organique, par exemple, MEK ou EtOH,et un dispersant, par exemple, TEA, pour ajouter dans le produit de l'étape (b) et broyer avec les boules à broyer en dioxyde de zirconium pour assurer l'uniformité de l'état liquide du solvant et du dispersant;

(d) Ajouter le produit de l'étape ( C ) à la poudre de l'étape (b) pour broyer avec les boules à broyer en dioxyde de zirconium afin de réaliser un mélange égal de poudre et solvant/dispersant et dissoudre/disperser dans la boue;

(e) Prendre une certain quantité de plastifiant, par exemple DBP ou PEG, et broyer, par exemple du PVB, pour ajouter dans la boue et effectuer le broyage avec les boules à broyer en dioxyde de zirconium pour assurer l'uniformité;

(f) Ajouter une quantité de broyeur et plastifiant dans la boue en bande avant de commencer l'opération de moulage en bande;

(g) Traiter la boue en bande avec un équipement de moulage en bande pour produire une bande verte;

(h) Couper la bande verte en une bande verte à couche simple, qui est laminée et alignée en épaisseur pour produire un substrat vert formé;

2) Processus de fabrication pour un substrat en céramique pour électrode ou électrolyte

(i) Placer le substrat vert produit dans l'étape (h) dans un moule en métal de la même taille, envoyer vers un système de pression chaude à vide (VHPS) pour un traitement sous vide, avec moins de $1.33 \times 10^{-7}$ MPa ($1 \times 10^{-3}$ torrs), une chaleur <500˚C et une pression atteignant 1158,3MPa ($1.68 \times 10^5$ psi)) pour produire un substrat vert haute densité (HDGS);

(j) Le traitement en surface pour HDGS peut être réalisé par laminage LM, un tel processus d'amélioration du substrat par LM et VHPS étant aussi appelé « nouveau processus synergique » et le substrat obtenu de ce processus étant appelé substrat vert haute intégrité (HIGS);

(k) Presser et positionner l'HIGS avec le substrat céramique en dioxyde de zirconium dans une structure en sandwich sous température constante, puis le placer dans une fournaise à haute température avec positionneurs en oxyde d'aluminium/Zirconium comme supports avec une température jusqu'à 1 700˚C pour un processus d'agglomération cyclique à deux niveaux, le premier cycle est d'enlever tous les additifs organiques et les pores précédents;

(l) Le substrat électrode est sujet à impression d'écran, revêtement crépitant, revêtement tournant ou vaporisation à plasma avec une couche électrode pour le substrat en céramique électrolyte et/ou une couche électrolyte pour un substrat en céramique anode et est placé dans une fournaise haute température pour produire une demi-cellule SOFC-MEA (HC);

(m) La demi-cellule est sujette à impression d'écran, revêtement crépitant, revêtement tournant ou vaporisation à boue pour recouvrir la couche cathode en matériel LSM et/ou LSCF et est placée dans une fournaise haute température pour produire une cellule SOFC-MEA.

**2.** Une méthode de fabrication pour fabriquer un assemblage d'électrodes à membrane avec une cellule à carburant d'oxyde solide (MEA-SOFC) comme indiquée dans la Revendication 1, où la valeur QOV de 8YSZ est 68.0, NiO/8YSZ est 68.0 et la proportion du poids de NiO dans NiO+8YSZ est 35~65 wt%.

**3.** Une méthode de fabrication pour fabriquer un assemblage d'électrodes à membrane avec une cellule à carburant d'oxyde solide (MEA-SOFC) comme indiquée dans la Revendication 1, où le temps de broyage par boules dans l'étape (a) de la recette et processus de boue pour produire un substrat vert à électrode se situe entre 24~168 heures et le diamètre moyen des particules cibles de la poudre moulue se situe entre 300~500nm.

**4.** Une méthode de fabrication pour fabriquer un assemblage d'électrodes à membrane avec une cellule à carburant d'oxyde solide (MEA-SOFC) comme indiquée dans la Revendication 1, où la haute température pour l'agglomération dans l'étape (b) de la recette et processus de boue pour produire un substrat vert à électrode se situe entre 1 200~1 600˚C, et le temps de broyage par boules et le diamètre moyen des particules cibles sont respectivement plus de 24h et 300~500nm et les pores ajoutés précédemment incluent une poudre graphite d'une taille de micromètre ou nanomètre, selon la porosité requise par le substrat à former.

**5.** Une méthode de fabrication pour fabriquer un assemblage d'électrodes à membrane avec une cellule à carburant d'oxyde solide (MEA-SOFC) comme indiquée dans la Revendication 1, où le temps de broyage par boules dans l'étape (c) de la recette et processus de boue pour produire un substrat vert à électrode dépasse 24 heures.

**6.** Une méthode de fabrication pour fabriquer un assemblage d'électrodes à membrane avec une cellule à carburant d'oxyde solide (MEA-SOFC) comme indiquée dans la Revendication 1, où le temps de broyage par boules dans l'étape (d) de la recette et processus de boue pour produire un substrat vert à électrode dépasse 24 heures.

**7.** Une méthode de fabrication pour fabriquer un assemblage d'électrodes à membrane avec une cellule à carburant d'oxyde solide (MEA-SOFC) comme indiquée dans la Revendication 1, où le temps de broyage par boules dans l'étape (e) de la recette et processus de boue pour produire un substrat vert à électrode se situe entre 24-78 heures.

**8.** Une méthode de fabrication pour fabriquer un assemblage d'électrodes à membrane avec une cellule à carburant d'oxyde solide (MEA-SOFC) comme indiquée dans la Revendication 1, où la viscosité boueuse du substrat dans l'étape (f) de la recette et processus de boue pour produire un substrat vert à électrode se situe entre 150~1500CP.

**9.** Une méthode de fabrication pour fabriquer un assemblage d'électrodes à membrane avec une cellule à carburant d'oxyde solide (MEA-SOFC) comme indiquée dans la Revendication 1, où la spécification de la bande verte dans l'étape (g) de la recette et processus de boue pour produire un substrat vert à électrode a une largeur de 18~30 cm et une épaisseur de 10~300$\mu$m.

**10.** Une méthode de fabrication pour fabriquer un assemblage d'électrodes à membrane avec une cellule à carburant d'oxyde solide (MEA-SOFC) comme indiquée dans la Revendication 1, où la forme de la bande verte dans l'étape (h) de la recette et processus de boue pour produire un substrat vert à électrode est ronde ou carrée, la taille se situe entre $5 \times 5 cm^2 \sim 15 \times 15\ cm^2$, la température d'opération et la pression du lamineur se situent respectivement entre 50~100˚C et 13.79~34.48 MPa (2000-5000 psi) et l'épaisseur de la bande verte formée se situe entre 600~1200$\mu$m, .

**11.** Une méthode de fabrication pour fabriquer un assemblage d'électrodes à membrane avec une cellule à carburant d'oxyde solide (MEA-SOFC) comme indiquée dans la Revendication 1, où la température d'opération et la pression du système d'agglomération à pression chaude de vide dans l'étape (i) du processus de fabrication pour un substrat en céramique à électrode ou électrolyte sont respectivement < 500˚C et 1158.3MPa ($1.68 \times 10^5$ psi) et le vide est de $1.33 \times 10^{-7}$MPa ($1.0 \times 10^{-3}$ torrs),.

**12.** Une méthode de fabrication pour fabriquer un assemblage d'électrodes à membrane avec une cellule à carburant d'oxyde solide (MEA-SOFC) comme indiquée dans la Revendication 1, où l'opération de laminage dans l'étape (j) du processus de fabrication pour un substrat en céramique à électrode ou électrolyte inclut un second laminage;

**13.** Une méthode de fabrication pour fabriquer un assemblage d'électrodes à membrane avec une cellule à carburant d'oxyde solide (MEA-SOFC) comme indiquée dans la Revendication 1, où le premier cycle du processus d'agglomération dans l'étape (k) du processus de fabrication pour un substrat en céramique à électrode ou électrolyte inclut un contrôle de température: température ambiante →200˚C ( 4 hrs ) →450˚C ( 2hrs ) →750˚C ( 2hrs ) →1250˚C ( 6hrs ) → température ambiante et le second cycle du processus d'agglomération inclut aussi un contrôle de température: température ambiante →1400˚C ( 4hrs ) → température ambiante; le taux de contrôle pour l'augmentation/réduction des températures des deux cycles de processus d'agglomération est de 1˚C/min et de préférence en-dessous de 3˚C/min.

**14.** Une méthode de fabrication pour fabriquer un assemblage d'électrodes à membrane avec une cellule à carburant d'oxyde solide (MEA-SOFC) comme indiquée dans la Revendication 1, où l'épaisseur de la couche à électrolyte dans l'étape (1) du processus de fabrication pour un substrat en céramique à électrode ou électrolyte est de 10$\mu$m, le processus d'agglomération inclut un contrôle de température: température ambiante →1400˚C ( 4hrs ) → température ambiante; le taux de contrôle pour l'augmentation/réduction des températures des deux cycles de processus d'agglomération est de 1˚C/min et de préférence en-dessous de 3˚C/min.

**15.** Une méthode de fabrication pour fabriquer un assemblage d'électrodes à membrane avec une cellule à carburant d'oxyde solide (MEA-SOFC) comme indiquée dans la Revendication 1, où le matériel et l'épaisseur de la couche cathode dans l'étape (m) du processus de fabrication pour un substrat en céramique à électrode ou électrolyte sont respectivement LSM/LSCF et 30~50$\mu$m, le processus d'agglomération inclut un contrôle de température: température ambiante →1200˚C ( 3hrs ) → température ambiante; le taux de contrôle pour l'augmentation/réduction des températures des deux cycles de processus d'agglomération est de 1˚C/min et de préférence en-dessous de 3˚C/min.

NiO                                    8YSZ

first ball grinding

anode material

co-sintering

add graphite pore
former

second ball grinding

dry to remove water

add solvent dispersant
MEK/EtOH/TEA

third ball grinding

binder/plasticiser
PVB/DBP/PEG

fourth ball grinding

viscosity measurement

not passed                    passed

green slurry filtering

passed tape slurry

tape casting process

green tape

green tape cutting/manipulation

lamination process

VHPS operation

green substrate

first calcination/sintering

anode ceramic substrate  (w/ NiO)

electrolyte ceramic substrate (w/o NiO)

electrode/electrolyte layer fabrication onto anode substrate

(to be continued)

17

```
              ↓
   ┌────────────────────────────┐
   │ second calcination/sintering │
   └────────────────────────────┘
              ↓
          half cell
              ↓
   ┌──────────────────────────────────┐
   │ cathode layer fabrication onto half cell │
   └──────────────────────────────────┘
              ↓
   ┌────────────────────────────┐
   │  third calcination/sintering  │
   └────────────────────────────┘
              ↓
       SOFC-MEA unit cell
              ↓
   ┌──────────────────────────────────┐
   │  power performance test of unit cell  │
   └──────────────────────────────────┘
              ↓
        process completed
```

## FIG. 1

FIG.2

**Anode substrate (NiO+YSZ)**

FIG.3

anode material

co-sintering

add graphite pore former → second ball grinding

dry to remove water

add solvent dispersant MEK/EtOH/TEA → third ball grinding

binder/plasticiser PVB/DBP/PEG → fourth ball grinding

viscosity measurement

not passed

passed

green slurry filtering

passed tape slurry

FIG. 4

FIG.5

FIG.6

FIG.7

FIG.8

FIG.9

FIG.10